# EUROPÄISCHE PATENTSCHRIFT

(11) **EP 1 240 103 B1**
(45) Veröffentlichungstag und Bekanntmachung des Hinweises auf die Patenterteilung: **26.12.2007**
(21) Anmeldenummer: 00960268.1
(22) Anmeldetag: 22.09.2000
(51) Int. Cl.: C01B 31/04, C04B 35/626, H01B 1/24, C09C 1/46, C08K 3/04, H01M 4/02, H01M 8/02, C04B 35/52

(54) **VERFAHREN ZUR HERSTELLUNG VON GRAPHITPULVERN MIT ERHÖHTER SCHÜTTDICHTE**
METHOD FOR PRODUCING GRAPHITE POWDER WITH AN INCREASED BULK DENSITY
PROCEDE DE PRODUCTION DE POUDRE DE GRAPHITE A DENSITE APPARENTE AUGMENTEE

(30) Priorität: 26.11.1999 CH 216599
(43) Veröffentlichungstag der Anmeldung: 18.09.2002
(73) Patentinhaber: TIMCAL AG, 6743 Bodio (CH)
(72) Erfinder: SPAHR, Michael, CH-6512 Giubiasco (CH); CATTANEO, Davide, CH-6517 Arbedo (CH); STREB, Klaus, CH-5643 Sins (CH)
(74) Vertreter: Pohlman, Sandra M.
(86) Internationale Anmeldenummer: PCT/CH2000/000514
(87) Internationale Veröffentlichungsnummer: WO 2001/038220

(56) Entgegenhaltungen:
- CA-A- 2 246 953
- WANG HONGYU ET AL: "Effect of milling on the electrochemical performance of natural graphite as an anode material for lithium-ion battery" J POWER SOURCES;JOURNAL OF POWER SOURCES 1999 ELSEVIER SEQUOIA SA, LAUSANNE, SWITZERLAND, Bd. 83, Nr. 1, 1999, Seiten 141-147, XP000974803
- DATABASE WPI Section Ch, Week 199419 Derwent Publications Ltd., London, GB; Class A17, AN 1994-156757 XP002155421 & JP 06 100727 A (NIPPON KASEI KK), 12. April 1994 (1994-04-12)
- PATENT ABSTRACTS OF JAPAN vol. 014, no. 275 (C-0728), 14. Juni 1990 (1990-06-14) & JP 02 083205 A (TOKAI CARBON CO LTD), 23. März 1990 (1990-03-23)
- PATENT ABSTRACTS OF JAPAN vol. 1997, no. 03, 31. März 1997 (1997-03-31) & JP 08 298117 A (KANSAI COKE &CHEM CO LTD), 12. November 1996 (1996-11-12)
- PATENT ABSTRACTS OF JAPAN vol. 1996, no. 12, 26. Dezember 1996 (1996-12-26) & JP 08 213020 A (KANSAI COKE &CHEM CO LTD), 20. August 1996 (1996-08-20)
- DATABASE WPI Section PQ, Week 199638 Derwent Publications Ltd., London, GB; Class P41, AN 1996-382615 XP002155422 & RU 2 049 552 C (FEOFANOV N F), 10. Dezember 1995 (1995-12-10)

## Beschreibung

Die vorliegende Erfindung betrifft ein Verfahren zur Herstellung von Graphitpulvern mit erhöhter Schüttdichte. Insbesondere betrifft die vorliegende Erfindung die Behandlung von beliebigen pulverförmigen graphitischen Materialien mittels autogener Oberflächenbehandlung, wobei deren Schüttdichte, die Stampfdichte deutlich erhöht sowie weitere wichtige Materialeigenschaften, infolge der gegenseitigen physikalisch-mechanischen Einwirkung der einzelnen Pulverpartikel, vorteilhaft modifiziert werden.

Graphitische Materialien, insbesondere solche mit hohem Graphitanteil, sind an sich bekannt und werden technisch in vielseitiger Weise verwendet. Hochreine graphitische Kohlenstoffe, haben Xyloldichten (auch Einkristalldichten oder Realdichten genannt) im Bereich von 1.80 und 2.27 g cm⁻³und eine Kristallstruktur, die durch einen c/2-Wert von 0.3354 bis 0.3360 nm und einen L_{c}-Wert von grösser 40 nm (L_{c}>40 nm) charakterisiert werden kann. Diese Materialien werden aus natürlichen Vorkommen gewonnen, angereichert und gereinigt oder synthetisch in einem Hochtemperaturprozess aus amorphen Kohlenstoffprodukten hergestellt. In anschliessenden Mahlverfahren werden pulverförmige Materialien mit jeweils unterschiedlicher durchschnittlicher Partikelgrössen hergestellt. Eine angegebene Partikelgrösse für ein Pulver ist in der Regel immer ein Durchschnittswert einer bestimmten Partikelgrössenverteilung. Die für einen bestimmten Zweck zu verwendende Partikelgrössenverteilung hängt insbesondere von der Zusammensetzung des graphitischen Materials und den damit verbundenen Eigenschaften sowie von der vorgesehen Verwendung ab.

Die Partikelform ist immer plättchenförmig, wobei die Anisotropie der Partikel stärker ausgebildet ist, je höher die Xyloldichte und die L_{c}-Werte sind. Die Scott-Dichte (auch als Schüttdichte bezeichnet) solcher Materialien beispielsweise mit Partikelgrössen kleiner als 100 micron (Partikelgrösse < 100µm, bestimmt mittels Laserdiffraktrometrie) liegt in der Regel unter 0.25 g cm⁻³, wobei die Scott-Dichte umso kleiner ist, je kleiner die Partikelgrösse ist. Im allgemeinen führt die Zerkleinerung der Partikel durch Mahlung zu einer Verkleinerung der Scott-Dichte. Durch eine optimierte Partikelgrössenverteilung lässt sich die Scott-Dichte etwas erhöhen. So erreicht man beispielsweise durch eine optimierte Zusammensetzung an feinen und groben Anteilen für solche Materialien mit Partikelgrössen unter 100 micron Scott-Dichten bis maximal 0.3 g cm⁻³.

Die Stampfdichte, die Verpressbarkeit, die Absorptionsfähigkeit von polymeren Bindermaterialien und Flüssigkeiten wie Öle, von organischen Lösungsmitteln und wässrigen Systemen, sind ebenso wichtige Eigenschaften graphitischer Pulver. Diese Eigenschaften hängen mit der Zusammensetzung der graphitischen Pulvern und insbesondere auch mit der Partikelgrössenverteilung zusammen.

In CA-A-2 246 953) wird ein kugelförmiger Graphit beschrieben, der nur wenig von der Kugelform abweicht und einen Rundungsgrad ("degree of circularity") von nicht weniger als 0,86 aufweist. In Wang Hongyu et al., J.Power Sources, "Effect of milling on the electrochemical performance of natural graphite as an anode material for lithium-ion battery", wird empfohlen, Graphitpulver durch Mahlung, bzw. mittels "jet-milling" und "turbo milling", zu zerkleinern.

Es wurde nun gefunden, dass die Werte für die Scott-Dichte jeweils für ein graphitisches Pulver einer beliebigen Partikelgrössenverteilung überraschenderweise erheblich erhöht wird, wenn man das graphitische Pulver einer autogenen Oberflächenbehandlung unterzieht, bei der die Partikel bei geeigneter Geschwindigkeit und während einer genügend langen Zeit aufeinander prallen. Durch das Aufeinanderprallen und die damit verbundene gegenseitige physikalisch-mechanische Einwirkung wird die Kornstruktur bzw. die Kornoberfläche des graphitischen Kornes derart verändert, dass daraus eine erhebliche Erhöhung der Scott-Dichte resultiert. Ebenso werden die weiteren oben genannten Eigenschaften in erheblichem Masse modifiziert.

Das rohe gemahlene graphitische plättchenförmige Korn zeigt unter dem Elektronenmikroskop eine unregelmässige Form und ist scharfkantig. Durch die erfindungsgemässe Behandlung werden die unregelmässigen Partikelkonturen abgeschliffen und die Kanten abgerundet. Bei entsprechend optimiert dosierter Energie wird der bei anderen mechanischen Behandlungen auftretende Mahleffekt, der zur merklichen Erniedrigung der Schüttdichte führt, erheblich verringert bzw. minimiert. Zwar entsteht durch das Abschleifen der Partikel Staub, welcher, zusammen mit einem minimal auftretenden Mahleffekt, zu einer leichten Erniedrigung der Partikelgrösse und Scott-Dichte (Schüttdichte) führt. Doch überwiegt die durch die erfindungsgemässe Behandlung verursachte überraschend starke gesamte Zunahme der Scott-Dichte sowie die Änderung der weiteren Eigenschaften diesen Partikelgrösseneffekt bei weitem. Mit den beobachteten Änderungen der Partikelkonturen lässt sich die vorliegende Erfindung zumindest teilweise erklären. Die Erfindung ist jedoch an diese Erklärung nicht gebunden.

Die vorliegende Erfindung ist in den Patentansprüchen definiert. Insbesondere betrifft die vorliegende Erfindung ein Verfahren zur Erhöhung der Scott-Dichte von graphitischen Pulvern beliebiger Partikelgrössenverteilung, wobei das graphitische Pulver einen synthetischen und/oder natürlichen graphitischen Kohlenstoff mit plättchenförmiger Partikelform darstellt, welcher einen hohen Graphitanteil im Korn aufweist, dadurch gekennzeichnet, dass man (i) das graphitische Pulver einer autogenen Oberflächenbehandlung unterzieht, indem man die einzelnen Pulverpartikel mit einer dosierten Geschwindigkeit aufeinander prallen lässt, so dass sich deren Oberflächenstruktur verändert indem die unregelmässigen Partikelkonturen abgeschliffen und die Kanten abgerundet werden, wobei kein wesentlicher Mahleffekt auftritt und wobei es zu keiner Agglomeratebildung der Partikel kommt, und man (ii) diese autogene Oberflächenbehandlung solange aufrecht erhält bis sich die Scott-Dichte und/oder die Stampfdichte des Ausgangspulvers um mindestens 10% bis etwa 100% erhöht hat.

Das Verfahren der autogenen Oberflächenbehandlung bedeutet, dass man die einzelnen Pulverpartikel mit einer dosierten Geschwindigkeit aufeinander prallen lässt, so dass, durch die damit verbundene gegenseitige physikalisch-mechanische Einwirkung der einzelnen Körner aufeinander, sich deren Oberflächenstruktur verändert, das einzelne Korn im wesentlichen aber nicht gebrochen wird, das heisst kein wesentlicher Mahleffekt auftritt. Diese Veränderung der Kornkontur, bzw. der Oberflächenstruktur des einzelnen Kornes, bewirkt die erfindungsgemässe Erhöhung der Scott-Dichte. Dabei führt man die autogene Oberflächenbehandlung so lange durch und lässt die einzelnen Körner solange aufeinander einwirken, bis die gewünschte Scott-Dichte erreicht ist. Die dosierte Geschwindigkeit bedeutet, dass man die Geschwindigkeit bzw. die Energie mit welcher die einzelnen Körner beladen sind, so einstellt, dass die Körner beim Aufprall bzw. beim Zusammenprall nicht zerbrechen und somit ein Mahleffekt praktisch vermieden wird. Diese Einstellung ist für den Fachmann eine Frage der Verfahrensoptimierung und problemlos.

Mit der erfindungsgemässen autogenen Oberflächenbehandlung lässt sich die durch den optimierten Mahleffekt erzielbare Scott-Dichte für ein graphitisches Pulver einer beliebigen Partikelgrössenverteilung, jeweils um mindestens etwa 10% bis etwa 100%, vorzugsweise um etwa 20% bis 80% erhöhen. Derart werden für graphitische Materialien bisher noch nicht erreichte Scott-Dichten von 0.45 g/cm³ und höhere Werte erreicht.

Ebenso wird mit dem erfindungsgemässen Verfahren die durch den optimierten Mahleffekt erzielbare Stampfdichte für ein graphitisches Pulver einer beliebigen Partikelgrössenverteilung um mindestens etwa 10% bis 100%, vorzugsweise um etwa 20% bis 80% erhöht. Für graphitische Pulver werden derart bisher noch nicht erreichte Stampfdichten von mindestens 0.90 g/cm³ erreicht.

Die erfindungsgemässe autogene Oberflächenbehandlung führt man im Falle von Partikelgrössen <100µm vorzugsweise durch, indem man die graphitischen Pulverpartikel in einem inerten Trägergas fluidisiert bzw. dispergiert und die Partikel mit Hilfe des Trägergases beschleunigt, wie dies im weiteren beschrieben ist. Dabei wird die Intensität der Behandlung durch den Kohlenstofftyp und die Masse der Partikel, deren Geschwindigkeit sowie die pro Behandlung eingesetzte Materialmenge, das heisst der Konzentration der fluidisierten im Gas dispergierten Partikel, bestimmt. Je weicher der eingesetzte graphitische Kohlenstoff, je höher die Masse der Partikel, je höher die Geschwindigkeit und je höher die eingesetzte Menge, desto intensiver ist die Behandlung. Bei Partikelgrössen von <300µm erfolgt die Dispergierung und Beschleunigung der Partikel vorzugsweise durch rotierende mechanische Werkzeuge, beim vorliegenden verfahren beispielsweise durch eine Turbine bzw. direkt durch die rotierende Scheibe.

Gleichzeitig nimmt aber mit zunehmender Behandlungsintensität auch der auftretende Mahleffekt zu. Zur Erreichung der maximalen Schüttdichte eines Materials gibt es somit ein Intensitätsmaximum, das sich aus den optimierten Parametern Partikelgeschwindigkeit, Partikelmasse und eingesetzter Menge ergibt. Die Bildung von Agglomeraten durch ein verkleben kleinerer Teilchen, die ebenfalls zu einer nachhaltigen Erhöhung der ScottDichte führen würde, wurde nicht beobachtet. In keinem der durchgeführten Versuchen traten behandelte Teilchen auf, die grösser als die eingesetzten unbehandelten Teilchen waren. Auch rasterelektronenmikroskopische Untersuchungen der behandelten Materialien zeigten keine solche Agglomeratebildung.

Die erfindungsgemässe Behandlung erhöht nicht nur die Scott-Dichte, sondern verbessert auch die Verpressbarkeitseigenschaften der graphitischen Pulver und reduziert deren Absorptionsfähigkeit von polymeren Bindermaterialien und Flüssigkeiten wie Öle, organische Lösungsmittel und wässrige Systeme. Die Kristallinität der graphitischen Kohlenstoffpartikel hingegen bleibt durch die mechanische Oberflächenbehandlung unbeeinflusst. Auch die Strukturparameter und die Xyloldichte verändern sich gegenüber den unbehandelten Partikeln nicht.

Mit dem erfindungsgemässen Verfahren wird auch die durch den optimierten Mahleffekt erzielbare Pressdichte für ein graphitisches Pulver einer beliebigen Partikelgrössenverteilung um mindestens etwa 0.5% bis 10%, vorzugsweise um etwa 1% bis 8% erhöht. Stellt man aus den erfindungsgemäss behandelten Pulvern Presslinge her, indem man das behandelte Pulver bei einem Druck von 2.5 to/cm² zu Presslingen verpresst, so lassen sich gegenüber den unbehandelten Materialien deutlich höhere Pressdichten erzielen.

Im weiteren zeigen die erfindungsgemäss behandelten Pulver eine deutlich erniedrigte Ölabsorptionsfähigkeit und Binderaufnahme, welche im Bereich von etwa 10% bis 50% und insbesondere im Bereich von durchschnittlich etwa 20% bis 45% liegt, wobei auch Werte von über 50% erreichbar sind. Dieser Effekt wird durch die erfindungsgemässe Behandlung erzielt, da die Porosität (Porenstruktur) der Partikel durch die Behandlung nicht beeinflusst wird, was durch die kaum geänderte Stickstoffadsorptionseigenschaften und Xyloldichten gezeigt werden kann.

Die erwähnten deutlich erniedrigten Absorptionseigenschaften ergeben auch deutlich niedrigere Viskositäten von Dispersionen der erfindungsgemäss behandelten graphitischen Pulvern in flüssigen Medien, so dass sich mit den erfindungsgemäss behandelten graphitischen Pulvern Dispersionen mit entsprechend erhöhtem Feststoffgehalt herstellen lassen. Der Feststoffgehalt von flüssigen Kohenstoffdispersionen lässt sich bei Verwendung von erfindungsgemäss behandelten graphitischen Pulvern um mehr als 5 % auf über 30% erhöhen.

Für die erfindungsgemässe Verwendung geeignete graphitische Pulver sind insbesondere solche mit hohem Graphitanteil im Korn, insbesondere sogenannte hochreine Graphite, vorzugsweise mit Xyloldichten im Bereich von 1.80 und 2.27 g cm⁻³ und einer Kristallstruktur, die durch einen c/2-Wert von 0.3354 bis 0.3360 nm und einen L_{c}-Wert von grösser 40 nm (L_{c}>40 nm) charakterisiert sind. Die Pulver können aus natürlichen Vorkommen gewonnen oder synthetisch aus amorphen Kohlenstoffprodukten hergestellt sein und eine beliebige durchschnittliche Partikelgrösse und Partikelgrössenverteilung aufweisen. Bevorzugt sind graphitische pulverförmige Materialien mit einer mittleren Korngrösse von bis zu 150µm, vorzugsweise von 1µm bis 50µm, insbesondere pulverförmige hochreine Graphite. Solche Graphite sind an sich bekannt.

Das erfindungsgemässe Verfahren wird vorzugsweise so durchgeführt, dass man die zu behandelden graphitischen Pulverteilchen in einem Gas dispergiert und fluidisiert. Hierzu kann jedes an sich bekannte Verfahren der Fluidisationstechnik verwendet werden, in welchem die Teilchen im fluidisierten Zustand aufeinander prallen und dadurch ihre Oberflächenkonturen und Oberflächenstrukturen verändern. Dies ist beispielsweise in einem Fliessbett (fluidised bed) der Fall. Zur Durchführung des erfindungsgemässen Verfahrens werden die fluidisierten Teilchen jedoch vorzugsweise mit höheren Geschwindigkeiten versehen, derart dass die so fluidisierten Teilchen mit höheren Energien beschleunigt werden. Vorzugsweise werden die fluidisierten Teilchen in der gasförmigen Umgebung kontinuierlich konzentriert und wieder verdünnt. Die dabei auftretenden Zusammenstösse der in Rotation versetzten Partikel und ihre gegenseitige Reibung führt dazu, dass sich die Teilchen oberflächlich abschleifen. Dabei wird die auf die Teilchen übertragene Energie derart bemessen, dass die Teilchen durch die Zusammenstösse und die Reibung im wesentlichen nicht zerbrechen.

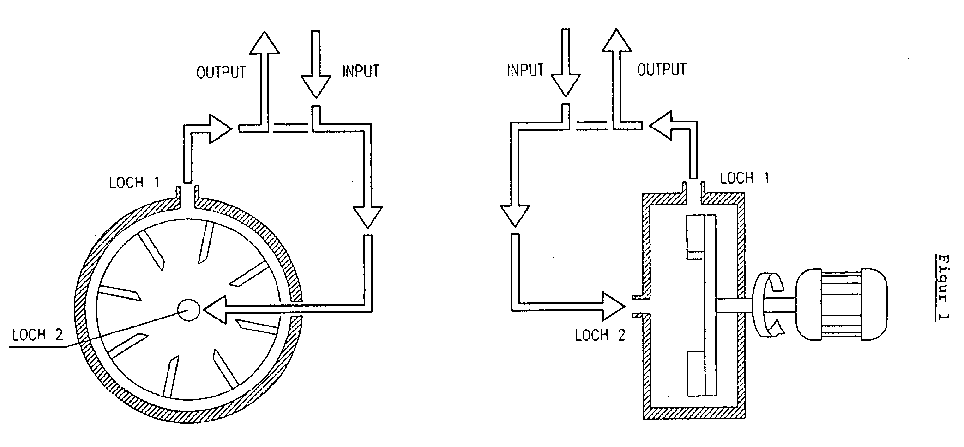

Das erfindungsgemässe Verfahren lässt sich z.B. optimiert in der in Figur 1 dargestellten, Vorrichtung durchführen. Diese Vorrichtung besteht insbesondere aus einer kreisförmigen Scheibe mit radial angeordneten bündig zum Rand angebrachten Schlagbolzen, welche von einem nach aussen abgeschlossenen zylinderförmigen Behandlungsraum umkleidet ist (Turbine mit damit verbundenem Turbineneffekt). Die Dimensionen des zylinderförmigen Behandlungsraums sind so bemessen, dass er die Scheibe umschliesst und zwischen dessen Innenwand und der rotierenden Scheibe etwas Zwischenraum belassen kann. Die Scheibe ist mit einem ausserhalb des Behandlungsraumes angebrachten Motor mittels einer Welle durch die Wand des Behandlungsraumes verbunden und kann durch diesen Motor in Rotation versetzt werden. Der zylinderförmige Behandlungsraum ist mit einer radial angeordneten Öffnung (Loch) versehen. Eine zusätzliche Öffnung ist im Zylindermantel des Behandlungsraumes senkrecht zur Scheibe und Scheibenachse angebracht. Diese beiden Öffnungen sind durch ein ausserhalb des Behandlungsraumes angebrachtes Rohr verbunden. Somit verbindet ein ausserhalb des Behandlungsraumes verlaufendes in der Wand des Behandlungsraumes angebrachtes Rohr die Peripherie des Behandlungsraumes mit dessen Zentrum. Das zentrifugal von der rotierenden Scheibe beschleunigte Gas (Fluid), welches die fluidisierten Teilchen enthält, zirkuliert durch dieses äussere Behandlungsrohr indem es infolge der Zentrifugalkraft an der Peripherie des Behandlungsraumes durch das Rohr austritt und durch dieses am andern Rohrende in das Zentrum des Behandlungsraumes zurückfliesst und erneut beschleunigt wird. Die Materialpartikel werden durch die Schlagbolzen der rotierenden Scheibe beschleunigt und in periphärer Richtung durch die Zentrifugalkräfte weggetrieben, die durch den Hochgeschwindigkeitsrotor erzeugt werden. Die so in das Gas dispergierten und beschleunigten Partikel zirkulieren in der Maschine entlang der Innenseite des Zylindermantels. Die Partikel, die den Eingang des Zirkulationsrohres erreichen, treten in das Rohr ein und kehren im Bereich des Mittelpunktes der Maschine zurück in den Behandlungsraum. Dies führt zu einer kontinuierlichen Konzentration und Verdünnung der Partikel im gasförmigen umgebenden Medium. Ein Teil der behandelten Partikel wird durch ein angebrachtes Rohr kontinuierlich zudosiert bzw. entnommen. Das Verfahren kann aber auch im Batchverfahren durchgeführt werden.

Die erfindungsgemäss behandelten graphitischen Pulver lassen sich mit Vorteil als Pigmente in wässrigen oder auf Lösungsmittel basierenden Dispersionen verwenden. Dabei erreicht man höhere Feststoffgehalte als mit unbehandelten Pulvern. Die Viskosität flüssiger Dispersionen von erfindungsgemäss behandelten Materialien bei gleichen Feststoffgehalten ist deutlich niedriger. Ebenso ergeben sich beim Auftragen und Trocknen erfindungsgemässer Dispersionen auf Substrate Beschichtungen mit deutlich niedrigerer Porositätswerten, da der Gehalt an Flüssigphase deutlich niedriger ist. Der höhere Feststoffgehalt führt auch dazu, dass man geringere Binder/Kohlenstoffverhältnisse braucht, um eine getrocknete Kohlenstoffbeschichtung auf einem Substrat zu stabilisieren. Die niedrigen polymeren Binderanteile führen zu deutlich erhöhten elektrischen und thermischen Leitfähigkeiten solcher Kohlenstoffschichten.

Dispersionen, die Mischungen von erfindungsgemäss behandelten synthetischen und/oder natürlichen graphitischen Kohlenstoffen und einem Polymerbinder in einem wässrigen oder Lösungsmittel-basierenden Medium enthalten, können auf Metallfolien aufgetragen werden und ergeben nach dem Trocknen stabile Beschichtungen (bei Dicken von 10 bis 5000 µm) mit erhöhten Graphit/Binder-verhältnis und damit auch erhöhter elektrischer und thermischer Leitfähigkeit. Die Porositäten der getrockneten Filme liegen in der Regel unter 50 % und sind somit erheblich tiefer als bei Filmen, die durch konventionelle Graphite gebildet werden. Solche Dispersionen lassen sich deshalb mit Vorteil auch für gasdichte und flüssigkeitsdichte Beschichtungen auf Metallsubstraten verwenden, die als elektrisch leitfähige Antikorrosionsfilme auf metallischen Folien und Platten eingesetzt werden können.

Die getrockneten Beschichtungen, die durch die erfindungsgemäss behandelten Graphite gebildet werden, lassen sich durch einen Kalander verpressen, ohne dass eine Delaminierung des Graphitfilmes von der Metallfolie eintritt. Diese Delaminierung von der Metallfolie wird bei unbehandelten Graphiten häufig beobachtet. Durch die Kalandrierung von Graphitfilmen, welche aus erfindungsgemäss behandelten graphitischen Pulvern hergestellt sind, lassen sich Beschichtungen mit Porositäten unter 30 % erreichen, ohne dass die Textur und Partikelstruktur der verwendeten Graphitpulver verändert werden. Solche Filmbeschichtungen auf Metallfolien, die sich durch Porositäten unter 30 % auszeichnen und mit niedrigeren Binder/Kohlenstoffverhältnissen stabilisiert werden, lassen sich als negative Elektroden mit Ladungsdichten über 550 Ah/L in Lithium-Ionenbatterien verwenden. Die Strombelastbarkeit solcher Elektroden sind deutlich höher als von Elektroden, welche mit konventionellen Graphitpulvern hergestellt sind. Damit sind solche negativen Elektroden sehr vorteilhaft für Lithium-Ionenzellen mit hoher Leistungsdichte verwendbar.

Die hohe Packungsdichte der erfindungsgemäss behandelten synthetischen oder natürlichen Graphite kombiniert mit der relativ niedrigen Polymerbinderabsorptionsfähigkeit ist vorteilhaft bei der Herstellung von Graphit-Polymerkompositen, die zu gasdichten elektrisch hoch leitfähige Graphitplatten verpresst werden können. Solche Platten werden vorteilhaft als Bipolarplatten in der Polymerelektrolyt-Brennstoffzellen-Technologie eingesetzt.

Mischungen von Polymeren mit erfindungsgemäss behandelten Synthese- oder Naturgraphiten oder graphitischen Kohlenstoffen bilden thermoplastische oder duroplastische Komposite mit einem höheren Kohlenstoff-Füllungsgrad und niedrigerer Verarbeitungsviskosität. Thermoplastische Polymer-Graphitkompositmaterialien mit erfindungsgemäss behandelten Graphiten zeigen höhere (und damit verbesserte) Werte bezüglich ihrer isotropen, mechanischen, thermischen und elektrischen Eigenschaften, und verhalten sich isotroper im Vergleich zu Komposits mit unbehandelten graphitischen Kohlenstoffen.

Metallische Nichteisen-Sintermaterialien, welche mit erfindungsgemäss behandelten synthetischen oder natürlichen graphitischen Kohlenstoffen hergestellt wurden bzw. solche Kohlenstoffe enthalten, zeigen verbesserte isotrope mechanische und tribologische Eigenschaften.

Die folgenden Beispiele beschreiben die Erfindung.

Beispiele 1 bis 5 zeigen die Materialeigenschaften von verschiedenen Graphiten vor und nach der erfindungsgemässen autogenen Oberflächenbehandlung. Die Versuche wurden in der im vorgehenden Abschnitt beschriebenen Vorrichtung durchgeführt. Die eingesetzte rotierende Scheibe hatte einen Umfang von 0.75 m und eine Umdrehungsgeschwindigkeit von 4800 Umdrehungen pro Minute.
Beispiele 1-5 wurden unter den in Tabelle 1 gegebenen Versuchsbedingungen durchgeführt.

**Tabelle 1**

| Beispiel | Graphit-Art | Eingesetzte Menge | Behandlungszeit | Geschwindigkeit der rotierenden Scheibe |
|---|---|---|---|---|
| 1 | TIMREX^{®} KS-Graphit | 150 g | 5 min | 4800 U/min |
| 2 | TIMREX^{®} SLX-Graphit | 150 g | 5 min | 4200 U/min |
| 3 | TIMREX^{®} SLM-Graphit | 150 g | 5 min | 4800 U/min |
| 4 | TIMREX^{®} SFG-Graphit | 200 g | 5 min | 4800 U/min |
| 5 | TIMREX^{®} NP-Graphit | 200 g | 7 min | 4800 U/min |
| 6 | TIMREX^{®} KS 5-75 TT | 200 g | 5 min | 4800 U/min |

| | | | | |
|---|---|---|---|---|
| TIMREX^{®} KS-Graphit = TIMREX^{®} KS 5-25 der TIMCAL AG TIMREX^{®} SLX-Graphit = TIMREX^{®} SLX 50 der TIMCAL AG TIMREX^{®} SLM-Graphit = TIMREX^{®} SLM 44 der TIMCAL AG TIMREX^{®} SFG-Graphit = TIMREX^{®} SFG 44 der TIMCAL AG TIMREX^{®} NP-Graphit = TIMREX^{®} NP 44 der TIMCAL AG | | | | |

Beispiele 1 bis 5 zeigen eine deutlich erhöhte Scott-Dichte (Schüttdichte) und Stampfdichte der erfindungsgemäss behandelten Pulver. Die behandelten Pulver zeigten keinerlei Agglomerate. Die resultierende Veränderung der Partikelgrössenverteilung weist auf einen geringen Mahleffekt hin. Die leichte Erniedrigung der d-Werte wird jedoch insbesondere durch den Staub hervorgerufen, der beim Abschleifen der Partikel erzeugt wird. Die Porenstruktur der behandelten Partikel ändert sich bei der Oberflächenbehandlung nicht. Es wird davon ausgegangen, dass die durch die Behandlung entstehenden Staubanteile und die leichte Abnahme der Partikelgrössenverteilung der Hauptgrund sind für die leichten Erniedrigungen der L_{c}-Werte und der Xyloldichten. Die Rückfederung der verpressten behandelten Materialien nimmt deutlich ab. Die Pressdichte von Presslingen, die bei Drücken von 2.5 to/cm² aus den behandelten Materialien hergestellt werden, nimmt deutlich zu. Obwohl die BET-Werte etwas erhöht sind, nimmt die Ölabsorption und Binderabsorption der erfindungsgemäss behandelten Teilchen deutlich ab. Die Dispersion behandelter Kohlenstoffteilchen in flüssigen Medien zeigen deutlich niedrigere Viskositäten als die Dispersionen unbehandelter Kohlenstoffteilchen. Der Feststoffgehalt von flüssigen Kohlenstoffdispersiönen lässt sich durch die Verwendung von erfindungsgemässen Kohlenstoffpartikel um mehr als 5% erhöhen. Der elektrische Widerstand der erfindungsgemäss behandelten Kohlenstoffe nimmt zu. Die aus der erfindungsgemässen Behandlung der Pulver resultierenden veränderten Oberflächenkonturen der einzelnen Partikel können deutlich aus rasterelektronenmikroskopischen Aufnahmen ersehen werden.

### Experimentelles

Die Partikelgrössenverteilung der Materialien wurde durch Laserdiffraktometrie mit einem MALVERN Mastersizer bestimmt. Die Strukturparameter ergaben sich aus Röntgenbeugungsversuchen unter Ausnutzung der CuK_{α1}-Linie. Die kristallographische Zellkonstante in c-Richtung (c/2) wurde aus der Winkellage des (002) bzw. des (004)-Beugungsreflexes bestimmt. Die maximale Höhe der einkristallinen Domänen in einem Partikel in der kristallographischen c-Richtung, Lc, und die sich daraus ergebende Anzahl der übereinander ideal geordneten Graphitebenen ergaben sich aus dem (002)- bzw. (004)-Beugungsreflex nach dem Model von Scherrer und Jones (P. Scherrer, Göttinger Nachrichten 2 (1918) S. 98; F. W. Jones, Proc. Roy. Soc. (London) 166 A (1938) S. 16). Die Xyloldichtebestimmung erfolgte nach DIN 51 901. Der Scott-Dichtebestimmung lag die Vorschrift ASTM B 329 zugrunde. Die Stampfdichtebestimmung wurde nach AKK-19 bestimmt. Die Bestimmung der spezifischen Oberflächen erfolgte nach Brunnauer, Emmett und Teller mit einem Micromeritics ASAP 2010. Zur Bestimmung der Rückfederung wurde das Material mit 0.5 to/cm² gepresst. Die Rückfederung ergab sich aus der Höhe des Presslings unter Druck und entlastet und wird in Prozent angegeben. Die Messung des elektrischen Widerstandes erfolgte nach DIN 51 911. Für die Messung wurde ein Pressling mit einem Druck von 2.5 to/cm² hergestellt. Die Pressdichte dieses Presslings ist ebenfalls angegeben. Die Messung der Ölabsorption geschah auf Basis der Vorschrift DIN ISO 787. Die Einwaage des Materials betrug 0.5 g, die des Öls 1.5 g. Die Mischung wurde in der Zentrifuge Sigma 6-10 90 min mit einer Umdrehungsgeschwindigkeit von 1500 U/min zentrifugiert.

### Beispiel 1

| | |
|---|---|
| TIMREX^{®} KS synthetischer Graphit Unbehandelt | TIMREX^{®} KS synthetischer Graphit nach der Behandlung |
| | |
| Granulometrie | Granulometrie |
| D₁₀=7.0 micron | d₁₀=5.9 micron |
| D₅₀=15.2 micron | d₅₀=13.5 micron |
| D₉₀=30.2 micron | d₉₀=27.4 micron |
| | |
| Lc (002)/Lc (004) | Lc (002)/Lc (004) |
| 120 nm/68 nm | 101 nm/64 nm |
| | |
| c/2 (002)/c/2 (004) | c/2 (002)/c/2 (004) |
| 0.3355 nm/0.3355 nm | 0.3355 nm/0.3355 nm |
| | |
| Xylendichte | Xylendichte |
| 2.254 g cm⁻³ | 2.248 g cm⁻³ |
| | |
| Scott-Dichte | Scott-Dichte |
| 0.23 g cm⁻³ | 0.30 g cm⁻³ |
| | |
| Stampfdichte | Stampfdichte |
| 0.539 g cm⁻³ | 0.674 g cm⁻³ |
| | |
| BET Oberfläche | BET Oberfläche |
| 8.6 m² g⁻¹ | 9.3 m² g⁻¹ |
| | |
| Rückfederung | Rückfederung |
| 17 % | 12.3 % |
| | |
| Elektrischer Widerstand | Elektrischer Widerstand |
| 1.911 mΩ cm | 2.085 mΩ cm |
| | |
| Ölabsorption | Ölabsorption |
| 113.5 % ± 1.3 % | 64.3 % ± 0.2 % |
| | |
| Pressdichte (2.5 to/cm⁻²) | Pressdichte (2.5 to/cm⁻²) |
| 1.863 g cm⁻³ | 1.957 g cm⁻³ |

### Beispiel 2

| | |
|---|---|
| TIMREX^{®} SLX synthetischer Graphit Unbehandelt | TIMREX^{®} SLX synthetischer Graphit nach der Behandlung |
| | |
| Granulometrie | Granulometrie |
| d₁₀=11.6 micron | d₁₀=7.4 micron |
| d₅₀=27.3 micron | d₅₀=20.4 micron |
| d₉₀=52.5 micron | d₉₀=40.8 micron |
| | |
| Lc (002)/Lc (004) | Lc (002)/Lc (004) |
| >500 nm/232 nm | 368 nm/158 nm |
| | |
| c/2 (002)/c/2 (004) | c/2 (002)/c/2 (004) |
| 0.3354 nm/0.3354 nm | 0.3354 nm/0.3354 nm |
| | |
| Xylendichte | Xylendichte |
| 2.261 g cm⁻³ | 2.258 g cm⁻³ |
| | |
| Scott-Dichte | Scott-Dichte |
| 0.30 g cm⁻³ | 0.38 g cm⁻³ |
| | |
| Stampfdichte | Stampfdichte. |
| 0.641 g/cm⁻³ | 0.778 g cm⁻³ |
| | |
| BET Oberfläche | BET Oberfläche |
| 4.0 m² g⁻¹ | 5.9 m² g⁻¹ |
| | |
| Rückfederung | Rückfederung |
| 7.7 % | 4.6 % |
| | |
| Elektrischer Widerstand | Elektrischer Widerstand |
| 0.986 mΩ cm | 1.166 mΩ cm |
| | |
| Ölabsorption | Ölabsorption |
| 94.7 % ± 11.9 % | 73.3 % ± 1.9 % |
| | |
| Pressdichte (2.5 to/cm⁻²) | Pressdichte (2.5 to/cm⁻²) |
| 2.036 g cm⁻³ | 2.051 g cm⁻³ |

### Beispiel 3

| | |
|---|---|
| TIMREX^{®} SLM synthetischer Graphit Unbehandelt | TIMREX^{®} SLM synthetischer Graphit nach der Behandlung |
| | |
| Granulometrie | Granulometrie |
| d₁₀=7.3 micron | d₁₀=4.3 micron |
| d₅₀=23.2 micron | d₅₀=13.9 micron |
| d₉₀=49.4 micron | d₉₀=35.0 micron |
| | |
| Lc (002)/Lc (004) | Lc (002)/Lc (004) |
| 241 nm/139nm | 196 nm/116 nm |
| | |
| c/2 (002) /c/2 (004) | c/2 (002) /c/2 (004) |
| 0.3354 nm/0.3354 nm | 0.3354 nm/0.3354 nm |
| | |
| Xylendichte | Xylendichte |
| 2.254 g cm⁻³ | 2.252 g cm⁻³ |
| | |
| Scott-Dichte | Scott-Dichte |
| 0.19 g cm⁻³ | 0.34 g cm⁻³ |
| | |
| Stampfdichte | Stampfdichte |
| 0.408 g cm⁻³ | 0.738 g cm⁻³ |
| | |
| BET Oberfläche | BET Oberfläche |
| 4.9 m² g⁻¹ | 7.7 m² g⁻¹ |
| | |
| Rückfederung | Rückfederung |
| 14.0 % | 8.6 % |
| | |
| Elektrischer Widerstand | Elektrischer Widerstand |
| 1.278 mΩ cm | 1.741 mΩ cm |
| | |
| Ölabsorption | Ölabsorption |
| 109.5 % ± 2.7 % | 75.0 % ± 5.3 % |
| | |
| Pressdichte (2.5 to/cm⁻²) | Pressdichte (2.5 to/cm⁻²) |
| 1.930 g cm⁻³ | 2.036 g cm⁻³ |

### Beispiel 4

| | |
|---|---|
| TIMREX^{®} SFG synthetischer Graphit Unbehandelt | TIMREX^{®} SFG synthetischer Graphit nach der Behandlung |
| | |
| Granulometrie | Granulometrie |
| d₁₀=7.5 micron | d₁₀=4.4 micron |
| d₅₀=24.1 micron | d₅₀=15.0 micron |
| d₉₀=49.2 micron | d₉₀=35.5 micron |
| | |
| Lc (002)/Lc (004) | Lc (002)/Lc (004) |
| 320 nm/138 nm | 283 nm/199 nm |
| | |
| c/2 (002) /c/2 (004) | c/2 (002) /c/2 (004) |
| 0.3354 nm/0.3354 nm | 0.3354 nm/0.3354 nm |
| | |
| Xylendichte | Xylendichte |
| 2.262 g cm⁻³ | 2.258 g cm⁻³ |
| | |
| Scott-Dichte | Scott-Dichte |
| 0.20 g cm⁻³ | 0.36 g cm⁻³ |
| | |
| Stampfdichte | Stampfdichte |
| 0.420 g cm⁻³ | 0.766 g cm⁻³ |
| | |
| BET Oberfläche | BET Oberfläche |
| 5.9 m² g⁻¹ | 7.4 m² g⁻¹ |
| | |
| Rückfederung | Rückfederung |
| 9.2 % | 5.6 % |
| | |
| Elektrischer Widerstand | Elektrischer Widerstand |
| 0.925 mΩ cm | 0.986 mΩ cm |
| | |
| Ölabsorption | Ölabsorption |
| 110.2 % ± 6.4 % | 81.8 % ± 6.9 % |
| | |
| Pressdichte (2.5 to/cm⁻²) | Pressdichte (2.5 to/cm⁻²) |
| 2.005 g cm⁻³ | 2.036 g cm⁻³ |

### Beispiel 5

| | |
|---|---|
| TIMREX^{®} NP gereinigter natürlicher Graphit Unbehandelt | TIMREX^{®} NP gereinigter natürlicher Graphit, unbehandelt nach der Behandlung |
| | |
| Granulometrie | Granulometrie |
| d₁₀=6.6 micron | d₁₀=3.7 micron |
| d₅₀=23.0 micron | d₅₀=13.8 micron |
| d₉₀=49.5 micron | d₉₀=36.9 micron |
| | |
| Lc (002)/Lc (004) | Lc (002)/Lc (004) |
| 364 nm/166 nm | 255 nm/103 nm |
| | |
| c/2 (002)/c/2 (004) | c/2 (002)/c/2 (004) |
| 0.3354 nm/0.3354 nm | 0.3354 nm/0.3354 nm |
| | |
| Xylendichte | Xylendichte |
| 2.263 g cm⁻³ | 2.258 g cm⁻³ |
| | |
| Scott-Dichte | Scott-Dichte |
| 0.24 g cm⁻³ | 0.42 g cm⁻³ |
| | |
| Stampfdichte | Stampfdichte |
| 0.495 g cm⁻³ | 0.862 g cm⁻³ |
| | |
| BET Oberfläche | BET Oberfläche |
| 5.0 m² g⁻¹ | 7.9 m² g⁻¹ |
| | |
| Rückfederung | Rückfederung |
| 4.9 % | 3.8 % |
| | |
| Elektrischer Widerstand | Elektrischer Widerstand |
| 0.910 mΩ cm | 1.359 mΩ cm |
| | |
| Ölabsorption | Ölabsorption |
| 107.2 % ± 3.6 % | 58.9 % ± 0.6 % |
| | |
| Pressdichte (2.5 to/cm⁻²) | Pressdichte (2.5 to/cm⁻²) |
| 2.066 g cm⁻³ | 2.064 g cm⁻³ |

### Beispiel 6

| | |
|---|---|
| TIMREX^{®} KS gereinigter natürlicher Graphit Unbehandelt | TIMREX^{®} KS gereinigter natürlicher Graphit, unbehandelt nach der Behandlung |
| | |
| Granulometrie | Granulometrie |
| d₁₀=8.3 micron | d₁₀=3.1 micron |
| d₅₀=38.4 micron | d₅₀=38.4 micron |
| d₉₀=68.4 micron | d₉₀=68.4 micron |
| | |
| Lc (002)/Lc (004) | Lc (002)/Lc (004) |
| 142 nm/62 nm | 105 nm/52 nm |
| | |
| c/2 (002)/c/2 (004) | c/2 (002)/c/2 (004) |
| 0.3355 nm/0.3355 nm | 0.3356 nm/0.3356 nm |
| | |
| Xylendichte | Xylendichte |
| 2.227 g cm⁻³ | 2.225 g cm⁻³ |
| | |
| Scott-Dichte | Scott-Dichte |
| 0.44 g cm⁻³ | 0.46 g cm⁻³ |
| | |
| Stampfdichte | Stampfdichte |
| 0.84 g cm⁻³ | 0.902 g cm⁻³ |
| | |
| BET Oberfläche | BET Oberfläche |
| 4.1 m² g⁻¹ | 8.0 m² g⁻¹ |
| | |
| Rückfederung | Rückfederung |
| 25 % | 14.68 % |
| | |
| Elektrischer Widerstand | Elektrischer Widerstand |
| 2.109 mΩ cm | 2.311 mΩ cm |
| | |
| Ölabsorption | Ölabsorption |
| 97.2 % ± 1.6 % | 54.7 % ± 0.8 % |
| | |
| Pressdichte (2.5 to/cm⁻²) | Pressdichte (2.5 to/cm⁻²) |
| 1.912 g cm⁻³ | 1.972 g cm⁻³ |

## Patentansprüche

1. Verfahren zur Erhöhung der Scott-Dichte von graphitischen Pulvern beliebiger Partikelgrößenverteilung, wobei das graphitische Pulver einen synthetischen und/oder natürlichen graphitischen Kohlenstoff mit plättchenförmiger Partikelform darstellt, welcher einen hohen Graphitanteil im Korn aufweist, **dadurch gekennzeichnet, dass** man (i) das graphitische Pulver einer autogenen Oberflächenbehandlung unterzieht, indem man die einzelnen Pulverpartikel mit einer dosierten Geschwindigkeit aufeinander prallen lässt, so dass die sich deren Oberflächenstruktur verändert indem die unregelmässigen Partikelkonturen abgeschliffen und die Kanten abgerundet werden, wobei kein wesentlicher Mahleffekt auftritt, und wobei es zu keiner Agglomeratebildung der Partikel kommt, und man (ii) diese autogene Oberflächenbehandlung solange aufrecht erhält, bis sich die Scott-Dichte und/oder die Stampfdichte des Ausgangspulvers um mindestens 10% bis etwa 100% erhöht hat.

2. Verfahren nach Anspruch 1, **dadurch gekennzeichnet, dass** das graphitische Pulver hochreinen Graphit darstellt.

3. Verfahren nach Anspruch 1 oder 2, **dadurch gekennzeichnet, dass** das graphitische Pulver eine Xyloldichte im Bereich von 1.80 und 2.27 g cm⁻¹ und eine Kristallstruktur, die durch einen c/2-Wert von 0.3354 bis 0.3360 nm und einen L_{c}-Wert von größer 40 nm (L_{c}>40 nm) charakterisiert ist, aufweist.

4. Verfahren nach einem der Ansprüche 1-3, **dadurch gekennzeichnet, dass** das graphitische Pulver eine Korngröße von bis zu 150 µm, vorzugsweise von 1 µm bis 50 µm, aufweist.

5. Verfahren nach einem der Ansprüche 1-4, **dadurch gekennzeichnet, dass** man die autogene Oberflächenbehandlung so lange durchführt, bis sich die Scott-Dichte und/oder die Stampfdichte des Ausgangspulvers um mindestens 20% bis 80% erhöht hat.

6. Verfahren nach Anspruch 5, **dadurch gekennzeichnet, dass** man die autogene Oberflächenbehandlung durchführt, indem man graphitische Pulverpartikel mit Partikelgrößen von <100 µm in einem inerten Trägergas mit Hilfe eines Trägergases fluidisiert bzw. dispergiert.

7. Verfahren nach Anspruch 5, **dadurch gekennzeichnet, dass** man die autogene Oberflächenbehandlung durchführt, indem man graphitische Pulverpartikel mit Partikelgrößen von <300 µm mittels eines rotierenden mechanischen Werkzeugs, vorzugsweise mittels einer Turbine dispergiert.

8. Verfahren zur Herstellung von Dispersionen in flüssigen Medien mit erhöhtem Feststoffgehalt, **dadurch gekennzeichnet, dass** man ein graphitisches Pulver beliebiger Partikelgrößenverteilung, wobei das graphitische Pulver einen synthetischen und/oder natürlichen graphitischen Kohlenstoff mit plättchenförmiger Partikelform darstellt, welcher einen hohen Graphitanteil im Korn aufweist, einer autogenen Oberflächenbehandlung gemäss einem der Ansprüche 1 bis 7 unterzieht und man das erhaltene Pulver anschliessend zur Herstellung von Dispersionen in flüssigen Medien mit erhöhtem Feststoffgehalt verwendet.

9. Verfahren zur Herstellung von wässrigen oder auf Lösungsmittel basierenden Dispersionen, **dadurch gekennzeichnet, dass** man ein graphitisches Pulver beliebiger Partikelgrößenverteilung, wobei das graphitische Pulver einen synthetischen und/oder natürlichen graphitischen Kohlenstoff mit plättchenförmiger Partikelform darstellt, welcher einen hohen Graphitanteil im Korn aufweist, einer autogenen Oberflächenbehandlung gemäss einem der Ansprüche 1 bis 7 unterzieht und man das erhaltene Pulver anschliessend als Pigment in wässrigen oder auf Lösungsmittel basierenden Dispersionen verwendet.

10. Verfahren zum Auftrag auf metallischen Folien und Platten bzw. zur Herstellung von Beschichtungen mit erhöhtem Graphit/Binder-Verhältnis und erhöhter elektrischer und thermischer Leitfähigkeit, insbesondere zur Herstellung von gasdichten und flüssigkeitsdichten Beschichtungen auf Metallsubstraten, **dadurch gekennzeichnet, dass** man ein graphitisches Pulver beliebiger Partikelgrößenverteilung, wobei das graphitische Pulver einen synthetischen und/oder natürlichen graphitischen Kohlenstoff mit plättchenförmiger Partikelform darstellt, welcher einen hohen Graphitanteil im Korn aufweist, einer autogenen Oberflächenbehandlung gemäss einem der Ansprüche 1 bis 7 unterzieht und man das erhaltene Pulver anschliessend mit mit einem Polymerbinder in einem wässrigen oder Lösungsmittel-basierenden Medium mischt und dann zum Auftrag auf metallischen Folien und Platten bzw. zur Herstellung von Beschichtungen mit erhöhtem Graphit/Binder-Verhältnis und erhöhter elektrischer und thermischer Leitfähigkeit, insbesondere zur Herstellung von gasdichten und flüssigkeitsdichten Beschichtungen auf Metallsubstraten verwendet.

11. Verfahren zur Herstellung von negativen Elektrode in Lithium-Ionenbatterien, **dadurch gekennzeichnet dass** gemäss Anspruch 10 erhaltene beschichtete Metallsubstrate als negative Elektrode in Lithium-Ionenbatterien verwendet werden.

12. Verfahren zur Herstellung von metallischen Nichteisen-Sintermaterialien, **dadurch gekennzeichnet, dass** man ein graphitisches Pulver beliebiger Partikelgrößenverteilung, wobei das graphitische Pulver einen synthetischen und/oder natürlichen graphitischen Kohlenstoff mit plättchenförmiger Partikelform darstellt, welcher einen hohen Graphitanteil im Korn aufweist, einer autogenen Oberflächenbehandlung gemäss einem der Ansprüche 1 bis 7 unterzieht und man das erhaltene Pulver anschliessend zur Herstellung von metallischen Nichteisen-Sintermaterialien verwendet.

13. Verfahren zur Herstellung von thermoplastischen oder duroplastischen Graphit-Polymerkompositen, welche gegebenenfalls weiter zu gasdichten elektrisch hoch leitfähigen Graphitplatten verpresst werden können, vorzugsweise für den Einsatz als Bipolarplatten in der Polymerelektrolyt-Brennstoffzellen-Technologie, **dadurch gekennzeichnet, dass** man ein graphitisches Pulver beliebiger Partikelgrößenverteilung, wobei das graphitische Pulver einen synthetischen und/oder natürlichen graphitischen Kohlenstoff mit plättchenförmiger Partikelform darstellt, welcher einen hohen Graphitanteil im Korn aufweist, einer autogenen Oberflächenbehandlung gemäss einem der Ansprüche 1 bis 7 unterzieht und man das erhaltene Pulver anschliessend zur Herstellung von thermoplastischen oder duroplastischen Graphit-Polymerkompositen, welche gegebenenfalls weiter zu gasdichten elektrisch hoch leitfähigen Graphitplatten verpresst werden können, vorzugsweise für den Einsatz als Bipolarplatten in der Polymerelektrolyt-Brennstoffzellen-Technologie verwendet.

## Claims

1. Process for increasing the Scott density of graphite powders of any particle size distribution, the graphite powder being a synthetic and/or natural graphitic carbon having platform-like form, which has a high graphite content in the particle, **characterized by** (i) subjecting the graphite powder to an autogenous surface treatment in which the individual powder particles are allowed to impact with one another at a measured speed so that their surface structure changes by grinding off the irregular particle contours and rounding off the edges without a substantial milling effect occurring and without agglomerate formation of the particles occurring, and (ii) said autogenous surface treatment is carried out until the Scott density and/or the tamped density of the starting powder has increased by at least about 10 % to about 100 %.

2. Process according to claim 1, **characterized in that** the graphite powder is high-purity graphite.

3. Process according to claim 1 or 2, **characterized in that** the graphite powder has a xylene density ranging from 1.80 to 2.27 g cm⁻¹ and a crystal structure **characterized by** a c/2 value of 0.3354 to 0.3360 nm and an L_{c} value of more than 40 nm (L_{c}>40 nm).

4. Process according to any one of claims 1 to 3, **characterized by** the graphite powder having a particle size of up to 150 µm, preferably of 1 µm to 50 µm.

5. Process according to any one of claims 1 to 4, **characterized by** the autogenous surface treatment being carried out until the Scott density and/or the tamped density of the starting powder has increased by at least 20 % to 80 %.

6. Process according to claim 5, **characterized by** the autogeneous surface treatment being carried out by fluidizing or dispersing graphite powder particles with sizes of <100 µm in an inert carrier gas with the aid of the carrier gas.

7. Process according to claim 5, **characterized by** the autogeneous surface treatment being carried out by dispersing graphite powder particles with sizes of <300 µm by means of a rotating mechanical tool, preferably by means of a turbine.

8. Process for the preparation of dispersions in liquid media with an increased solids content, **characterized by** a graphite powder of any particle size distribution, the graphite powder being a synthetic or natural graphitic carbon, which has a high graphite content in the particle, being subjected to an autogeneous surface treatment according to any one of claims 1 to 7 and the obtained powder is subsequently used for the preparation of dispersions in liquid media with an increased solids content.

9. Process for the preparation of aqueous or solvent-based dispersions, **characterized by** a graphite powder of any particle size distribution, the graphite powder being a synthetic or natural graphitic carbon, which has a high graphite content in the particle, being subjected to an autogeneous surface treatment according to any one of claims 1 to 7 and the obtained powder is subsequently used as pigment in aqueous or solvent-based dispersions.

10. Process for coating onto metal foils and plates or for the production of coatings with an increased graphite/binder ratio and increased electrical and thermal conductivities, particularly for the production of gas-tight and liquid-tight coatings on metal substrates, **characterized by** a graphite powder of any particle size distribution, the graphite powder being a synthetic or natural graphitic carbon, which has a high graphite content in the particle, being subjected to an autogeneous surface treatment according to any one of claims 1 to 7 and the obtained powder is subsequently mixed with a polymer binder in an aqueous or solvent-based medium and further used for coating onto metal foils and plates, or for the preparation of coatings with an increased graphite/binder ratio and increased electrical and thermal conductivities, particularly, for use for the production of gas-tight and liquid-tight coatings on metal substrates.

11. Process for the preparation of negative electrodes in lithium ion batteries, **characterized by** the coated metal substrates obtained according to claim 10 being used as negative electrodes in lithium ion batteries.

12. Process for the preparation of metallic non-ferrous sintered materials, **characterized by** a graphite powder of any particle size distribution, the graphite powder being a synthetic or natural graphitic carbon, which has a high graphite content in the particle, being subjected to an autogeneous surface treatment according to any one of claims 1 to 7 and the obtained powder is subsequently used for the preparation of metallic non-ferrous sintered materials.

13. Process for the production of thermoplastic or thermosetting graphite/polymer composites which optionally can be further compressed to gas-tight graphite plates of high electrical conductivity, preferably for use as bipolar plates in polymer electrolyte fuel cell technology, **characterized by** a graphite powder of any particle size distribution, the graphite powder being a synthetic or natural graphitic carbon, which has a high graphite content in the particle, being subjected to an autogeneous surface treatment according to any one of claims 1 to 7 and the obtained powder is subsequently used for the preparation of thermoplastic and thermosetting graphite/polymer composites which can be optionally further compressed to gas-tight graphite plates of high electrical conductivity, preferably for use as bipolar plates in polymer electrolyte fuel cell technology.

## Revendications

1. Procédé destiné à l'augmentation de la densité de Scott de poudres graphitiques à répartition quelconque de tailles des particules, la poudre graphitique étant représentative d'un carbone graphitique synthétique et/ou naturel avec des particules de forme lamellaire, lequel contient une proportion élevée de graphite dans le grain, **caractérisé en ce que** (i) la poudre graphitique est soumise à un traitement de surface autogène au cours duquel les différentes particules de poudre sont projetées les unes sur les autres à une vitesse dosée, de sorte que leur structure de surface se modifie du fait que les contours irréguliers des particules sont abrasés et les arêtes arrondies, sans qu'un effet sensible de mouture intervienne, et sans que les particules s'agglomèrent, et **en ce que**, (ii) ce traitement de surface autogène est maintenu jusqu'à ce que la densité de Scott et/ou la densité après damage de la poudre de départ ait augmenté d'au moins 10 % à environ 100 %.

2. Procédé selon la revendication 1, **caractérisé en ce que** la poudre graphitique est représentative d'un graphite de haute pureté.

3. Procédé selon la revendication 1 ou 2, **caractérisé en ce que** la poudre graphitique possède une densité xylène dans la plage comprise entre 1,80 et 2,27 g cm⁻¹ et une structure cristalline qui est **caractérisée par** une valeur c/2 de 0,3354 à 0,3360 nm, et une valeur L_{c} supérieure à 40 nm (L_{c} > 40 nm).

4. Procédé selon l'une des revendications 1 à 3, **caractérisé en ce que** la granulométrie de la poudre graphitique peut aller jusqu'à 150 µm, et est de préférence de 1 µm à 50 µm.

5. Procédé selon l'une des revendications 1 à 4, **caractérisé en ce que** le traitement de surface autogène est effectué jusqu'à ce que la densité de Scott et/ou la densité après damage de la poudre de départ ait augmenté d'au moins 20 % à 80 %.

6. Procédé selon la revendication 5, **caractérisé en ce que** le traitement de surface autogène est effectué par la fluidisation ou la dispersion de particules de poudre graphitique avec des tailles de particules < 100 µm dans un gaz vecteur inerte à l'aide d'un gaz vecteur.

7. Procédé selon la revendication 5, **caractérisé en ce que** le traitement de surface autogène est effectué par la dispersion de particules de poudre graphitique avec des tailles de particules < 300 µm au moyen d'un outil mécanique rotatif, de préférence au moyen d'une turbine.

8. Procédé de préparation de dispersions dans des milieux liquides à teneur accrue en matières solides, **caractérisé en ce qu'**une poudre graphitique à répartition quelconque de tailles des particules, la poudre graphitique étant représentative d'un carbone graphitique synthétique et/ou naturel avec des particules de forme lamellaire, lequel contient une proportion élevée de graphite dans le grain, est soumise à un traitement de surface autogène selon l'une des revendications 1 à 7, et **en ce que** la poudre obtenue est ensuite utilisée pour la préparation de dispersions dans des milieux liquides à teneur accrue en matières solides.

9. Procédé de préparation de dispersions aqueuses ou à base de solvants, **caractérisé en ce qu'**une poudre graphitique à répartition quelconque de tailles des particules, la poudre graphitique étant représentative d'un carbone graphitique synthétique et/ou naturel avec des particules de forme lamellaire, lequel contient une proportion élevée de graphite dans le grain, est soumise à un traitement de surface autogène selon l'une des revendications 1 à 7, et **en ce que** la poudre obtenue est ensuite utilisée en tant que pigment dans des dispersions aqueuses ou à base de solvants.

10. Procédé destiné à l'application sur des films et plaques métalliques ou à la réalisation de revêtements à rapport graphite / liant accru et à conductibilité électrique et thermique accrue, notamment à la réalisation de revêtements étanches aux gaz et étanches aux liquides sur des substrats métalliques, **caractérisé en ce qu'**une poudre graphitique à répartition quelconque de tailles des particules, la poudre graphitique étant représentative d'un carbone graphitique synthétique et/ou naturel avec des particules de forme lamellaire, lequel contient une proportion élevée de graphite dans le grain, est soumise à un traitement de surface autogène selon l'une des revendications 1 à 7, et **en ce que** la poudre obtenue est ensuite mélangée avec un liant polymère dans un milieu aqueux ou à base de solvants, et est alors utilisée pour l'application sur des films et des plaques métalliques ou pour la réalisation de revêtements à rapport graphite / liant accru et à conductibilité électrique et thermique accrue, notamment pour la réalisation de revêtements étanches aux gaz et étanches aux liquides sur des substrats métalliques.

11. Procédé de fabrication d'électrodes négatives pour des batteries ioniques au lithium, **caractérisé en ce que** des substrats métalliques revêtus obtenus selon la revendication 10 sont utilisés en tant qu'électrodes négatives dans des batteries ioniques au lithium.

12. Procédé de fabrication de matériaux métalliques frittés non ferreux, **caractérisé en ce qu'**une poudre graphitique à répartition quelconque de tailles des particules, la poudre graphitique étant représentative d'un carbone graphitique synthétique et/ou naturel avec des particules de forme lamellaire, lequel contient une proportion élevée de graphite dans le grain, est soumise à un traitement de surface autogène selon l'une des revendications 1 à 7, et **en ce que** la poudre obtenue est ensuite utilisée pour la fabrication de matériaux métalliques frittés non ferreux.

13. Procédé de fabrication de composites polymères graphitiques thermoplastiques ou thermodurcissables, qui peuvent le cas échéant être comprimés en plaques de graphite étanches aux gaz de haute conductibilité électrique, de préférence pour l'utilisation en tant que plaques bipolaires dans la technologie des cellules électrochimiques à électrolyte polymère, **caractérisé en ce qu'**une poudre graphitique à répartition quelconque de tailles des particules, la poudre graphitique étant représentative d'un carbone graphitique synthétique et/ou naturel avec des particules de forme lamellaire, lequel contient une proportion élevée de graphite dans le grain, est soumise à un traitement de surface autogène selon l'une des revendications 1 à 7, et **en ce que** la poudre obtenue est ensuite utilisée pour la fabrication de composites polymères graphitiques thermoplastiques ou thermodurcissables, qui peuvent le cas échéant être comprimés en plaques de graphite étanches aux gaz à haute conductibilité électrique, de préférence pour l'utilisation en tant que plaques bipolaires dans la technologie des cellules électrochimiques à électrolyte polymère.
